# EUROPEAN PATENT SPECIFICATION

(11) **EP 0 805 621 B1**
(45) Date of publication and mention of the grant of the patent: **03.04.2002**
(21) Application number: 96906162.1
(22) Date of filing: 11.01.1996
(51) Int. Cl.: A01D 34/73

(54) **LINE HEAD FOR FLEXIBLE LINE TRIMMER**
SCHNEIDKOPF FÜR TRIMMER MIT FLEXIBLEM SCHNEIDFADEN
TETE DE TONDEUSE A FIL SOUPLE

(30) Priority: 11.01.1995 US 371282
(43) Date of publication of application: 12.11.1997
(73) Proprietor: WCI OUTDOOR PRODUCTS, Inc., Cleveland, Ohio 44111 (US)
(72) Inventor: BRANT, Ron, Smyrna, TN 37167-6236 (US); HOUGE, Michael, S., Shreveport, LA 71118 (US); TUGGLE, Lloyd, H., Shreveport, LA 71119 (US)
(74) Representative: Klunker . Schmitt-Nilson . Hirsch
(86) International application number: US9600356
(87) International publication number: WO9621345

(56) References cited:
- FR-A- 2 625 865
- US-A- 1 319 429
- US-A- 2 087 002
- US-A- 4 097 991
- US-A- 4 203 212
- US-A- 4 362 074
- US-A- 4 566 189
- US-A- 4 633 588
- US-A- 4 702 005

## Description

### FIELD OF INVENTION

The invention relates generally to vegetation cutters and more particularly to line heads for flexible line trimmers.

### BACKGROUND OF THE INVENTION

To overcome what is generally perceived to be the major deficiency of flexible line trimmers, a great deal of effort has been directed in the past to methods of making replenishing broken cutting line more convenient for users without substantially complicating and increasing the cost of a line trimmer. A standard approach is to sell a supply of replacement line on a spool and have the user mount it in a line head that is coupled to the motor of the line trimmer. A line head typically includes a hub, coupled to the output shaft of a motor, and a housing or shroud extending outwardly from the hub and down around the spool to protect to the spool from dirt and debris. The user places the spool on the hub, feeds a small length of line through an opening in the housing, and places a cover over the spool to retain and protect the spool within the line head. The spool is locked to the hub so that rapid spinning of the line head flails the line. When line breaks, the spool is unlocked and spun on the hub to unwind line through the opening.

Several methods have been used to lock and unlock the spool against the hub. Early line heads used a manual release mechanism. To replace line, the trimmer was stopped and turned upside down. The locking mechanism was released manually and the spool turned to unwind and feed line. To avoid having to stop and turn the trimmer upside to feed line, most current line heads have a "bump-feed" mechanism that indexes the spool through a predetermined angle of rotation each time it is bumped against the ground, thus allowing the user to feed a predetermined amount of line while the trimmer is running. There also exist line heads which automatically index the spool without any intervention of the user. Generally, these heads sense a change in the centrifugal force acting on a component of the spinning head or on the flailing line to release the spool for rotation and pay-out line when the line becomes short.

Though bump-feed and automatic line heads provide a great deal of convenience for the user, once a supply of flexible line on a spool is exhausted, the line trimmer must be turned on its side or upside down and held in an unwieldy position to replace the empty spool with another spool pre-wound with line and reattach the cover. Covers of line heads are often attached to the line head in a manner that demands such dexterity and strength to unfasten and remove that many users become frustrated by the task of replacing a spool.

One approach to make spool replacement easier is to locate in the spool in the handle of the trimmer, near the user. Examples of these configurations are illustrated in U.S. Patent No. 4,369,577 of Gise, et al. and U.S. Patent No. 4,285,128 of Schnell, et al. However, the line must then be fed through the handle shaft of the trimmer motor and then through line head, replacing one potentially frustrating task with another. U.S. Patent No. 4,633,588 to Pittinger, Jr., on the other hand, retains the spool in the line head, but attempts to provide for an improved spool fastening mechanism that does not require removal of a cover. Instead, its fastening mechanism is released through a pin extending through the bottom of the spool. This pin-actuated release mechanism has, however, several disadvantages. It has several moving parts and is relatively complicated. It thus tends to be more expensive to manufacture and is more susceptible to sticking or interference from accumulation of dirt and debris around the pin and the fastening mechanism. The spool could thus be prematurely released during use or the pin become very difficult to push to release the spool.

In accordance with the pre-characterizing part of claim 1, US-A-4 566 189 discloses a line head for a flexible line trimmer comprising a spool, a housing and a hub, wherein said spool is retained in a housing by means of a cover. However, a specific manner of retaining the spool is not disclosed in this reference.

Moreover, US-A-4 203 212 discloses a line trimmer comprising a spool, a housing and a hub wherein such spool is retained by means of a detente, a specific manner of retaining being not disclosed in this reference. Moreover, in this prior art the spool is not mounted on the hub of the housing.

### SUMMARY OF THE INVENTION

The invention is a line head for a flexible line trimmer as defined in claim 1, having a spool retention mechanism that allows a spool to be removed from a line head in a single movement by a user simply pulling down on the spool. The spool may also be replaced in a single movement by pushing the spool into the line head. No fasteners need to be released or covers removed. Furthermore, the spool mechanism is simple, inexpensive to manufacture and assemble, and is less susceptible to the adverse effects of dirt and debris.

According to the invention, a line head includes a retention member mounted within a downwardly facing socket defined within a hub in the center of the line head without extra fasteners. The retention member extends radially outwardly from the hub under the spool and engages the bottom of the spool. The spool is thus free to rotate and to move upwardly on the hub. Manually pushing a spool onto or pulling the spool off of the hub pushes the retention member radially inwardly, permitting the spool to be mounted and released in a single movement. The retention member is inserted through the bottom of the hub and snapped into place in a single movement, thus securing it against movement without separate fasteners such as screws.

In accordance with a preferred embodiment of the invention, the socket in the hub electrically insulates the retention member from the drive shaft of an AC electric motor to which the line head is attached. A metal arbor extending through the plastic injection molded hub is not necessary for attaching the retention member to the line head as no separate fastener is required to attach the retention member within the socket. The AC motor is thereby double insulated for safety.

In accordance with yet another preferred embodiment of the invention, a spool for a line head, which includes a hub formed around the spool's axis of rotation and disk-shaped flanges located on opposite ends of the hub extending perpendicularly to the axis of rotation, is specially adapted to reduce the tendency of line to "nest." A line "nests" when it becomes entangled in a manner that resembles a bird's nest. Nesting is a nuisance to a user. It interferes with replacing the spool in the line head and the line feeding operation of the line head. When the line is being wound, nesting will also tend to spread the flanges of the spool, which interferes with spool replacement and feeding line from the line head. To help to overcome this problem, a spool is formed with a series of grooves or ridges formed around the outer circumference of the hub, parallel to the flanges. The grooves or ridges tend to reduce lateral movement of inner layers of line as additional layers of line are wound and unwound over inner layers of line.

In a preferred embodiment, a retention member is a form of a spring which includes four legs extending downwardly when mounted within a socket of the hub. Two of the opposed legs flare outwardly through slots in a side wall of the hub and then back inwardly to form knob-shaped tabs depressible by application of pressure to the surfaces of the tabs in either direction parallel to the axis of the hub. When the spool is fully mounted on the hub, the bottom of the spool clears the tabs, allowing the tabs to spring outwardly and thereby retain the spool on the hub. Pushing a spool onto or pulling it from the hub depresses the tabs of the spring, releasing the spool. To retain the spring within the hub without the need for fasteners, the other two opposed legs of the spring are bent outwardly to form a retaining tabs for fitting into slots within the sides of the socket. The spring is easily fabricated and installed in the hub of the line head by inserting the retention member into the socket, the retaining tabs snapping into the slots within the hub. It also has a minimal number of moving parts or surfaces, thus lessening the adverse effects of dirt and debris generated by using the line trimmer.

These and other features and advantages invention are described in or will be apparent from the following detailed description of the preferred embodiment of the invention as illustrated in the accompanying drawings.

### BRIEF DESCRIPTION OF DRAWINGS

FIGURE 1 is a cross-section through a motor housing section of a flexible line trimmer and a line head, the line head split along its axis of rotation to show a spool in two axially displaced operating positions.
FIGURE 2A is a cross-section of the line head of Fig. 1, illustrating the spool and button assembly fully removed from the line head.
FIGURE 2B is a cross-section of the line head of Fig. 1 that illustrates the position of the spool and button assembly as it is being removed from or inserted into the line head.
FIGURE 2C is a cross-section of the line head of Figures 1 and 3 with the spool and button assembly fully mounted within the line head.
FIGURE 3 is a bottom plan view of the line head of Fig. 1 with a portion of a bottom wall of the spool partly removed.
FIGURE 4 is a section of the line head illustrated in Fig. 3, taken along Section line 4-4.
FIGURE 5 is an exploded view of a spool retention assembly portion in the line head of Fig. 1.
FIGURE 6 is a section of an embodiment of the line head according to the invention.
FIGURE 7 is an exploded perspective view of an alternative embodiment of the spool retention assembly in the line head of FIGURE 6.

### DESCRIPTION OF PREFERRED EMBODIMENTS

Like numbers refer to like parts in the following description.

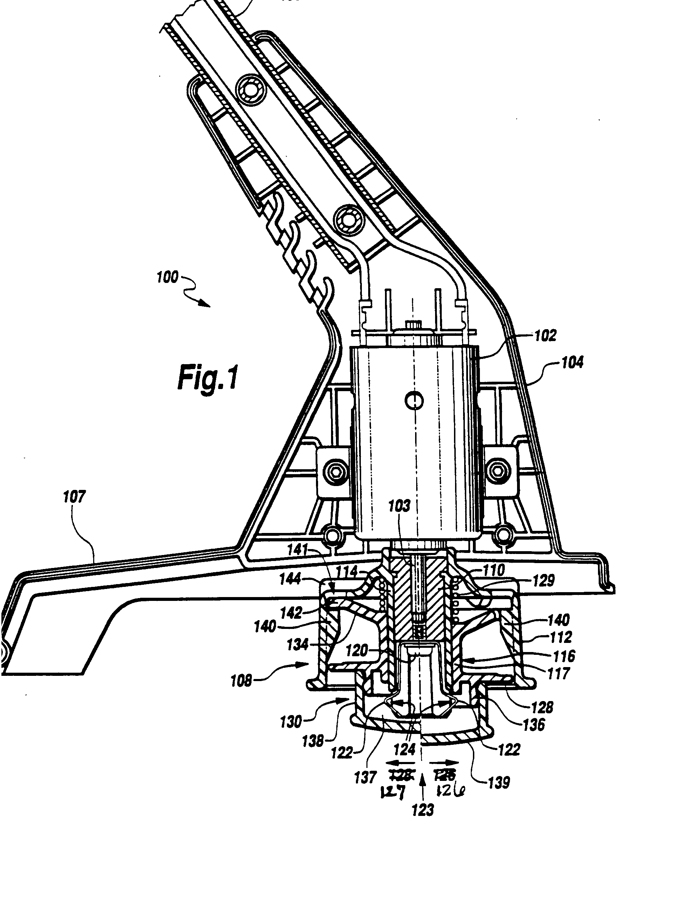

Referring now to FIGURE 1, an electric flexible line trimmer 100 includes an electric motor 102 mounted within motor housing 104. The motor housing is manufactured in two halves, the right half being removed for purposes of illustration. The motor's output shaft 103 is generally vertical with respect to the ground when the flexible line trimmer is held in a normal operating position. Tubular handle support tube 106 is attached to the upper end of the housing 104. The housing includes an integrally formed shield 107. Though not shown, mounted to the upper end of the handle support tube 106 is a handle with a trigger switch for turning on and off a flow of current to the motor. The trimmer may also include an auxiliary handle to assist in holding and maneuvering the trimmer. The electric flexible line trimmer illustrated is just one example of flexible line trimmers generally other types include those powered by internal combustion engines. Heavier engines are usually located at the opposite end of the support tube 106 for better balance and are coupled to the line head through a shaft extending through the middle of the support tube 106.

The output shaft 103 of motor 102 is coupled to a line head 108 through a metal arbor 110. The arbor includes a socket that receives the end of the output shaft 103 of the motor. The arbor is attached to a hub 114 of the line head for transmitting torque from the shaft 103 to the hub. Integrally formed with hub 114 is line head housing 112, formed from a circular skirt extending outwardly from the hub and then down around the hub. This cup-shaped housing defines a cavity in which a reel or spool 116 is mounted for rotation about the hub. The spool includes a hollow, cylindrical hub section 117 for mounting the spool on the hub 114 for rotation. The spool thus rotates on the hub about the same axis of rotation as the line head. The spool is normally wound with a supply of flexible, monofilament line (not shown). Bottom side wall 128 and top side wall 134 of the spool are integrally formed with the spool's hub 117 and assist in retaining line wound on the spool. Bottom side wall 128 is solid and also forms a bottom wall of the line head housing.

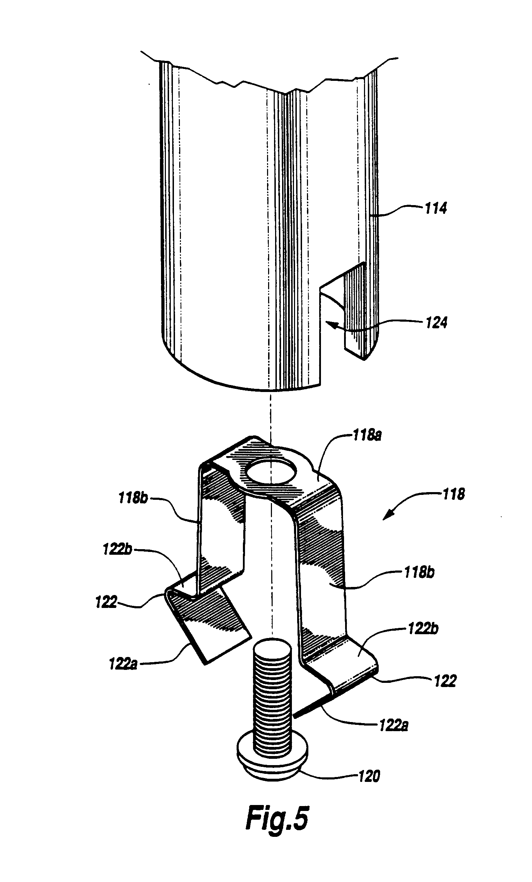

Referring to FIGURES 1 and 5 together, the cylindrically-shaped line head hub 114 has a hollow center or bore, into which the arbor extends and in which a retention spring 118 is mounted. Retention spring 118 is a generally U-shaped leaf spring. It has a relatively flat mid section 118a, with a hole through which a screw 120 extends to attach the spring to the arbor. It also has two downwardly extending legs 118b. The bottom portion of each leg is bent to form a knob 122. Each knob extends outwardly through slots 124 formed through the side of the hub 114. The spring 118 is compressed by the inside walls of the hubs 114, providing a bias to the knobs in their fully extended position as shown. Each knob has two exterior surfaces 122a and 122b exposed when fully extended through a slot. Each surface is slanted or angled obliquely with respect to the axis of rotation of the hub, which axis indicated by dashed line 123. A force applied to either surface that is substantially parallel to the axis of rotation of the hub generates, when combined with the ramp offered by the surfaces 122a and 122b, a force perpendicular to the axis of the hub which has a magnitude sufficient to overcome the biasing force of spring 118 tends to deflect the knobs inwardly to the point that the peak of each knob lies within the radius of the hub of the spool. The spool is thus able to be pulled off of or pushed onto the hub 114 in a single movement.

Referring now only to FIGURE 1, line head 108 is illustrated split along the axis of rotation of the spool, indicated by line 123, to show it in two operating positions. Side 126 of the line shows the spool in a first normal operating position and side 127 shows it in a second, axially displaced operating position. The spool 116 is biased to its first operating position by compressed coiled spring 129. The knobs 122 abut the bottom edge of the spool hub 117 when it is in the first operating position to hold or retain the spool on the hub. Swiftly hitting or bumping button 130 against the ground axially displaces the spool to its second operating position.

The spool 116 and the button 130 are formed by separate injection molding processes and then permanently joined in a single movement. A circular ridge or rim 136 is formed on the bottom side of the spool surrounding the center of the spool. The ridge has an undercut formed on its outer circumference or surface. The radius of the ridge with respect to the axis of rotation of the hub, is large enough to accommodate the knobs 122 when fully extended below the spool. The button is circular and is generally shaped like a bowl, with a cavity 137 formed by side walls 138 extending perpendicularly upward from a bottom wall or surface 139 of the button. The bottom of the button has a convex outer surface that assists in bumping the line head when the surface of the ground is uneven or the trimmer is being held at an angle and also reduces the friction when bumped on a hard, flat surface. On the inside of the rim of the sides 138 of the button is formed an undercut that complements and mates with the undercut on the ridge 136 of the spool. During factory assembly, the spool and button are pushed together so that the undercuts on the spool and undercut on the button hook each other, thus securely attaching the spool and button in a single movement without fasteners. The hooked rims of the button and spool also seal the inside surfaces of the spool's hub, helping to prevent dirt and debris kicked up during use from interfering with rotation of the spool in the line head and its removal. The radius of the cavity 137 is greater than the radius of the hub, permitting the knobs 122 of the spring to extend radially outward beneath the spool. The depth of the cavity 137 in the button is also large enough to accommodate the knobs when the spool is displaced upwardly to the second operating position, thus permitting the spool to rotate freely. Also, if the head is used with electrically powered units as shown in Figure 1, fins 144 are molded at the top of the hub. These fins create an air flow that cools the electric motor. Also if debris wraps around the head, it may create problems if it reaches the motor shaft. To avoid this problem, the hub is extended in such a way that shields the motor output shaft and bearing.

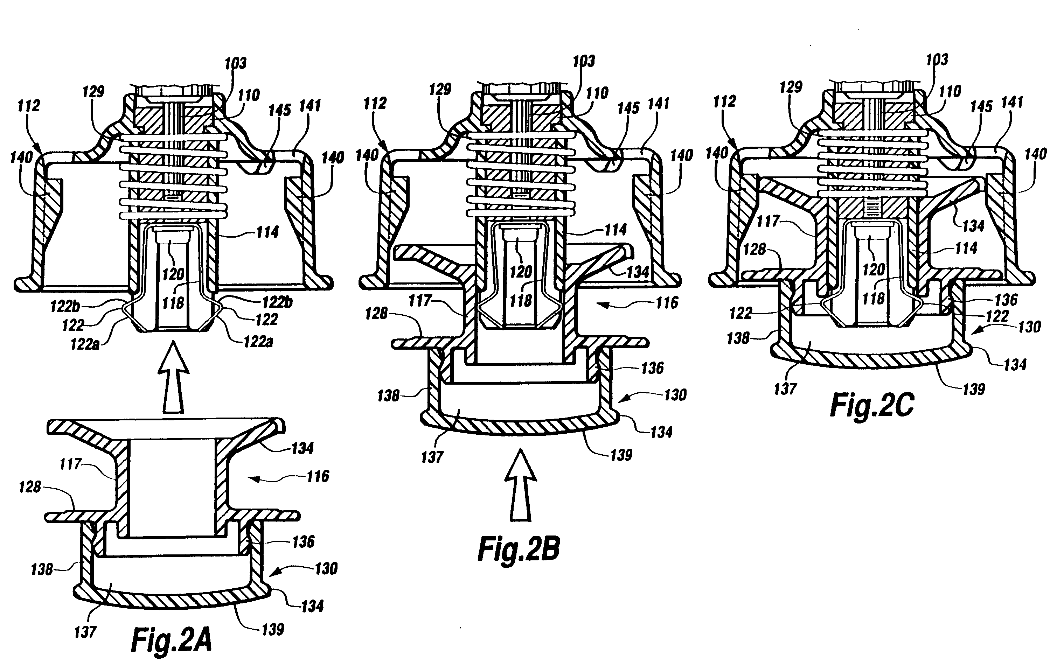

Referring now to FIGURES 2A, 2B and 2C, these figures illustrate spool 116, assembled with button 130, being mounted onto the hub 114 in a single movement. In Figure 2A, the assembly is fully removed. To mount the assembly, an operator grasps the button 130, aligns the hub of the spool with the hub of the line head, and pushes the top edge of the spool's hub against the lower surface 122a of the knobs 122. The angle of the lower surface 122a with respect a lever arm extending roughly between the screw 120 (about which each leg of the retention spring bends to be compressed) and the knob is less than that of the upper surface 122b, creating greater leverage to compress the retention spring. This makes mounting the spool easier than removing it. The tab angles and the biasing force of the spring is set so that most persons have the strength to comfortably overcome the biasing force of the spring to deflect the knobs inwardly.

In Figure 2B, knobs 122 have been fully deflected, creating sufficient clearance to permit the spool to slide on or off of the hub 114 of the line head.

In Figure 2C, once the spool 116 is slide past the knobs 122, the knobs spring back under the biasing force of the retention spring. As previously indicated, the knobs retain the spool and button assembly in the line head during normal operation. The biasing force applied by the retention spring, as well as centrifugal forces acting on the retention spring and its knobs when the line head is rapidly spinning, are sufficient to counteract forces experienced during normal operation that would tend to move the spool downward with respect to the line head.

The assembly of the spool 116 and button 130 is removed from the line head (after the line has been depleted for example) in a single movement similar to that used to slide the spool and button assembly on to the hub. A user grasps the button 130 and, assisted by ledge 134 on the outer circumference of the button, pulls down, causing the bottom edge of the spool's hub 117 to deflect the knobs inwardly to the point shown in Figure 2B. The spool is then free to be pulled off the hub by the user. The user may then replace the spool, if depleted of line, with a spool wound with line. Replacement spool and button assemblies are sold as a unit and wound with a full supply of line so that replenishing line is very easily and quickly accomplished.

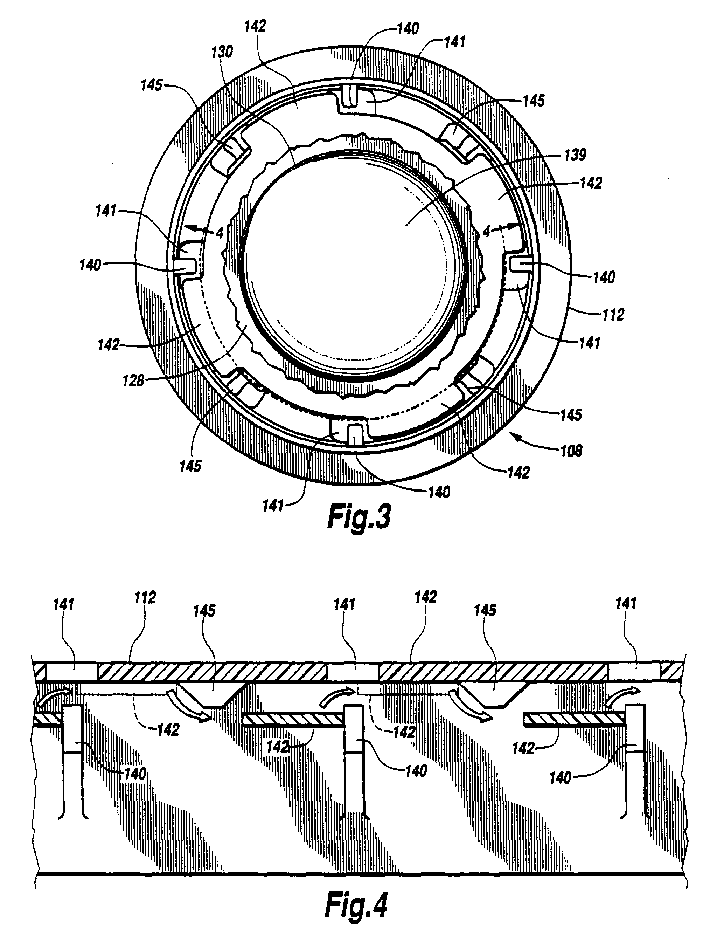

Referring now to FIGURES 1, 3 and 4, line head 108 includes an indexing mechanism comprised of a set of stepped detentes that function to pay out a predetermined amount of line in response to the bottom 130 being bumped swiftly against the ground.

In the first operation position, shown on side 126 of line 123 (Fig. 1), spool 116 is held against line head 108 for rotation with the line head by the cooperation of series of tab-like stops 140 projecting radially inwardly from the inner surface of housing 112 and ears 142 projecting radially outwardly from the edge of the upper side wall 134 of the spool 116. When the head starts spinning, the centrifugal force acting over the line outside of the spool moves the ears of the spool 142 against the stops in the hub 140. Rotation of the line head causes the stops 140 to engage ears 142, and thus rotate the spool with the line head. Stops 140 are equally spaced apart and integrally formed with the line head hub 114 and housing 112 during an injection molding process. Openings 141 are caused by the insertion into and retraction from the mold of pins that define the top edge of each stop during the injection molding process. Ears 142 are spaced apart at intervals equal to those of the stops. The ears are integrally formed on the spool during the injection molding process.

To feed or pay out a predetermined length of line from the line head 108 during operation, button 130 is hit swiftly against the ground, moving the spool 116 axially upward from the first operating position to the second or displaced operating position, shown on side 128 of line 123 in Fig. 1. Each ear 142 moves upward and over the top of stop 140, against which it had been held, thus releasing the spool 116 and allowing it to slip on hub 114 as the line head spins. A set of protuberances 145, stepped upwardly and displaced circumferentially from the stops 140, project inwardly from the line head housing in the plane of rotation of the ears when the spool is displaced. Each protuberance is spaced midway between adjacent stops 140. The protuberances stop rotation of the spool while the tap button is held against the ground when it is in the second displaced position, and assist in deflecting the ears 142 downwardly, under the urging of compressed spring 129 (Fig. 1) once the ears have moved past the stops 140. The spool then continues to slip in the first operating position until the ears engage the stops 140. The surfaces of the protuberances 145 are angled and face downwardly to assist in deflecting the ears downwardly toward the first operating position.

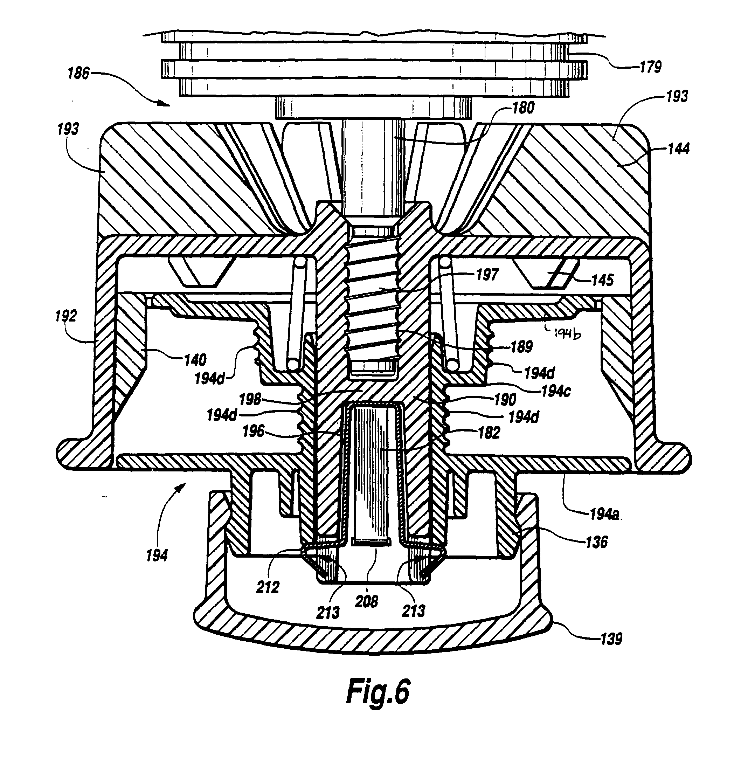

Referring now to FIGURE 6, the illustrated line head is specially adapted to be driven by an alternating current electric motor 179. The end of the motor's output shaft 180 is formed with self-tapping threads 197 so that it can be screwed into hole 189. Hole 189 is formed in the top of plastic hub 190 during a conventional plastic injecting molding process and is coaxial with the axis of rotation of the line head housing 192. A plurality of fins 193 on the upper surface of housing 192 cool the electric motor 179. Housing 192 includes a circular skirt extending around the housing hub 190 that defines a cavity in which a spool 194 is mounted for rotation on hub 190 about an axis common with line head 186. Spool 194 includes upper and lower flanges 194a and 194b integrally formed with and extending radially from spool hub 194c. Integrally formed on the outer surface of the spool hub 194c is a groove 194d that wraps around the circumference of the hub in a spiral fashion. The groove has a semi-circular cross section with a radius approximately the same or slightly larger than the radius of flexible monofilament line (not shown) that is normally wound around the spool hub. The groove, or the ridges formed between adjacent turns of the groove, tends to hold the line in place and reduce the tendency of the line to move laterally on the spool's hub, in the direction of its axis of rotation, as additional layers of line are wound around or unwound from the hub. Within a lower section of the hub 190 is defined during the injection molding process a socket 196 having a downward facing opening for receiving metal retention spring 182. The retention spring is electrically insulated from the output shaft 180 by wall 198.

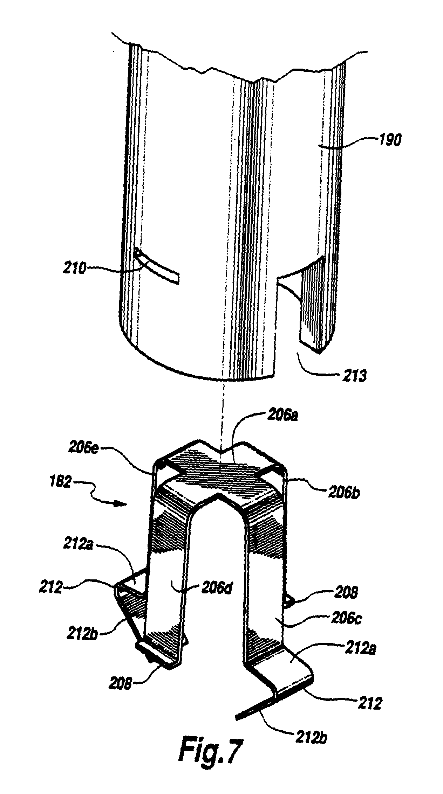

Referring now to FIGURES 6 and 7 together, the retention spring 182 is a generally cross-shaped piece of metal bent to form a four-leg leaf spring. It has a relatively flat midsection 206a, with four downwardly extending legs (206b, 206c, 206d, 206e). A bottom edge of each of a first opposed pair of legs (206b, 206d) are bent outward to form a flat tab 208 that fits into a slot 210 defined on opposite sides of the wall of the hub 190. Positioning the tabs 208 within the slots 210 secures the spring 182 against movement and twisting within socket 196. During assembly of the line head, retention spring is inserted into opening of the socket and mounted in a single movement. The first opposed pair of legs deflect inwardly during insertion until the tabs 208 align with and snap into slots 210. Each leg acts as a compressed spring that applies force sufficient to maintain registration of the tab with the slot and thereby essentially locks the retention spring into the socket. Mounting the spring 182 in this manner not only simplifies assembly of the line head, but it also makes possible elimination of a metal arbor or other metal components conventionally found within the line hub to which a fastener, such as a screw, would attach to retain the spring.

A second opposed pair of legs (206c, 206e) have bottom portions bent to form a knob 212. Each knob 212 extends outwardly through slots 213 formed through the side of hub 190. The spring 182 is slightly compressed by the inside wall of socket 196 providing a bias to the knobs 212 in their fully extended position as shown. Each knob 212 has two exterior surfaces 212a and 212b exposed when fully extended through a slot 213. Each exterior surface (212a, 212b) is slanted or angled obliquely with respect to the axis of rotation of the hub 190. A portion of a force applied to either exterior surface (212a, 212b) that is substantially parallel to the axis of rotation of the hub 190 is directed by the ramp formed by the surfaces into a direction generally perpendicular to the axis of the hub, tending to cause the knobs to deflect inwardly against the biasing force of the spring, to the point that the peak of each knob lies within the radius of the hub section 202 of the spool 194. The spool 194 is thus able to be pulled off or pushed onto the hub in a single movement.

The invention has been described in connection with a preferred embodiment. Alterations, modifications, rearrangements, substitutions and omissions may be made in the preferred embodiment without departing from the scope of the invention as set forth in the appended claims.

## Claims

1. A line head (108) for a flexible line trimmer comprising:
a spool (116) for holding a supply of flexible line; and
a housing (104) for coupling to a rotary shaft (110) for rotation about an axis, the housing (104) including a hub (114) extending downwardly within a central position of the housing (104) on which the spool (116) is mounted for rotation coaxial with the axis of the housing (104);
**characterized by**:
a detente (122;182) having an engaging surface (122a,b) extending radially, beyond the hub (114) for cooperating with the spool (116) to retain the spool (116) on the hub (114) in the axial direction while permitting rotation of the spool (116) on the hub (114), the engaging surface (122a,b) facing a generally upward direction, oblique with respect to the axis of rotation, for enabling the spool to deflect the detente radially inwardly when the spool is pulled axially downwardly with respect to the hub (114), thereby releasing the spool (116) and permitting removal of spool (116) from the hub (114); and
a spring (118;182) disposed within a socket (124,196) defined within a lower portion of the hub (114) for urging the detente (122) into an extended position, the spring and (118) the socket having cooperating surfaces for retaining the spring (118) within the socket (124,196) without a separate fastener.

2. The line head of Claim 1 wherein the hub (114) is formed of electrically insulated material and wherein the socket (124,196) defined therein electrically insulates the detente from a drive shaft (103) of a motor (102) received within an upper portion of the hub (114).

3. The line head of Claim 2 wherein the line head is attached to a self-tapping, threaded drive shaft of a motor (102) through a hole defined in the upper portion of the hub (114), and wherein the hub (114) is formed of plastic material.

4. The line head of Claim 1, 2 or 3 wherein the spring (182) includes first and second legs (206b-206e) operative as a leaf-type springs; the first leg (206b) being bent to form a knob (212,122) which extends beyond the hub (190) to form the detente and which has a first surface (122b-212a) defining the engaging surface of the detente and a second engaging surface (122a,212b) facing a generally downward direction, oblique to the axis of rotation, for enabling mounting and removal of the spool (116) onto the hub (114,190) in a single movement; and the second leg (206b,d) having a cooperating surface (208) formed thereon which is urged against a cooperating surface formed within the socket (196) to thereby retain the spring (182) and detente within the socket (196).

5. The line head of Claim 4 wherein the socket (190) includes an opening facing axially downwardly for inserting the spring (182) and wherein the cooperating surface (208) of the second leg (206b,d) of the spring (182) includes a tab urged by the second leg outwardly to engage the cooperating surface of the socket (196) defined by a slot (210) formed in a wall of the socket (196) for enabling mounting of the spring (212) within the socket (190) in a single movement without additional fasteners.

6. The line head of Claim 1, 2 or 3 wherein the spring includes first, second, third and fourth legs (206b-e) forming leaf-type springs, the first and third opposed pair of legs (206c,e) being bent to form a knob section (212) that extends beyond the hub (190) to form two detentes, each knob (212) having a first surface (212a) defining an engaging surface of the detente and a second engaging surface (212b) facing a generally downward direction, oblique to the axis of rotation for enabling mounting and removal of the spool (194) onto the hub (190) in a single movement, and the second and fourth opposed pair of legs (206b,d) urging retaining tabs (208) formed on each respective leg against cooperating surfaces within the socket (196) to thereby retain the spring (182) and detente within the socket (196).

7. The line head of any of the Claims 1 to 6 wherein the detente extends radially outwardly from the hub beneath the spool (116); and wherein the spool (116) includes a button (130) depending from its bottom surface for enabling axially upward displacement of the spool (116) when the button (130) is hit against the ground.

8. The line head of Claim 7 further including means (140,142) for indexing the spool (116) to pay out a predetermined length of the line in response to an upward axial displacement of the spool (116) with respect to the housing (104).

9. The line head of Claim 7 further including a coiled spring (129) concentric with the hub (114) between the spool (116) and the line head housing (104), for biasing the spool (116) axially downwardly against the detente.

10. The line head of any of the Claims 1 to 9 wherein the spool (116) includes a hollow hub (117) through which the housing's hub (114) extends and two flanges (128,134) located at opposite ends of the hub (117) and extending radially therefrom, the hub (117) including a plurality of spaced-apart ridges wrapped around the hub's outer circumference for reducing lateral movement of line wound around the hub.

## Patentansprüche

1. Ein Fadenkopf (108) für eine Schneidvorrichtung mit flexiblem Faden, aufweisend:
eine Spule (116) zum Halten eines Vorrats an flexiblem Faden; und
ein Gehäuse (104) zum Koppeln mit einer drehbaren Welle (110) zum Drehen um eine Achse, wobei das Gehäuse (104) eine Nabe (114) aufweist, die sich in einer mittleren Position des Gehäuses (104) abwärts erstreckt, wobei die Spule (116) an der Nabe (114) für eine mit der Achse des Gehäuses (104) koaxiale Drehung angebracht ist; **gekennzeichnet durch**:
eine Arretierung (122; 182) mit einer Angriffsfläche (122 a,b), die sich radial jenseits der Nabe (114) zum Zusammenarbeiten mit der Spule (116) erstreckt, um die Spule (116) an der Nabe (114) in der axialen Richtung zurückzuhalten, während eine Drehung der Spule (116) an der Nabe (114) ermöglicht wird, wobei die Angriffsfläche (122 a,b) in einer im Wesentlichen aufwärts weisenden Richtung, schräg in Bezug auf die Achse der Drehung, weist, um es der Spule zu ermöglichen, die Arretierung radial einwärts abzulenken, wenn die Spule in Bezug auf die Nabe (114) axial abwärts gezogen wird, wodurch die Spule (116) freigegeben und eine Entfernung der Spule (116) von der Nabe (114) ermöglicht werden; und
eine Feder (118; 182), die innerhalb eines Halses (124, 196) angeordnet ist, der innerhalb eines unteren Bereichs der Nabe (114) definiert ist, um die Arretierung (122) in eine ausgestreckte Position zu drängen, wobei die Feder (118) und der Hals zusammenwirkende Flächen zum Zurückhalten der Feder (118) innerhalb des Halses (124, 196) ohne ein getrenntes Befestigungselement aufweisen.

2. Der Fadenkopf nach Anspruch 1, bei dem die Nabe (114) aus elektrisch isolierendem Material gebildet ist und der Hals (124, 196), der in der Nabe (114) definiert ist, die Arretierung gegenüber einer Antriebswelle (103) eines Motors (102) elektrisch isoliert, die innerhalb eines oberen Bereichs der Nabe (114) aufgenommen ist.

3. Der Fadenkopf nach Anspruch 2, bei dem der Fadenkopf an eine selbstschneidende, mit Gewinde versehene Antriebswelle eines Motors (102) durch ein Loch angebracht ist, das im oberen Bereich der Nabe (114) definiert ist, und bei dem die Nabe (114) aus Kunststoffmaterial gebildet ist.

4. Der Fadenkopf nach Anspruch 1, 2 oder 3, bei dem die Feder (182) einen ersten Schenkel und einen zweiten Schenkel (206 b-206 e) aufweist, wobei diese Schenkel als blattartige Federn wirken; wobei der erste Schenkel (206 b) gebogen ist, um eine Nase (212, 122) zu bilden, die sich bis jenseits der Nabe (190) erstreckt, um die Arretierung zu bilden, und der eine erste Fläche (122 b, 212 a), welche die Angriffsfläche der Arretierung definiert, und eine zweite Angriffsfläche (122 a, 212 b) aufweist, die in einer im Wesentlichen abwärts weisenden Richtung, schräg zu der Achse der Drehung, weist, um ein Anbringen bzw. ein Entfernen der Spule (116) an der bzw. von der Nabe (114, 190) in einer einzigen Bewegung zu ermöglichen; und wobei der zweite Schenkel (206 b, d) eine an ihm gebildete, zusammenwirkende Fläche (208) aufweist, welche gegen eine innerhalb des Halses (196) gebildete, zusammenwirkende Fläche gedrängt ist, um hierdurch die Feder (182) und die Arretierung innerhalb des Halses (196) zurückzuhalten.

5. Der Fadenkopf nach Anspruch 4, bei dem der Hals (196) eine axial abwärts weisende Öffnung aufweist, um die Feder (182) einzusetzen, und bei dem die zusammenwirkende Fläche (208) des zweiten Schenkels (206 b, d) der Feder (182) eine Zunge aufweist, die durch den zweiten Schenkel auswärts gedrängt ist, um an der zusammenwirkenden Fläche des Halses (196) anzugreifen, die durch einen Schlitz (210), der in einer Wand des Halses (196) gebildet ist, definiert ist, um ein Anbringen der Feder (212) innerhalb des Halses (196) in einer einzigen Bewegung ohne zusätzliche Befestigungselemente zu ermöglichen.

6. Der Fadenkopf nach Anspruch 1, 2 oder 3, bei dem die Feder einen ersten, einen zweiten, einen dritten und einen vierten Schenkel, nämlich Schenkel (206 b - e) aufweist, welche blattartige Federn bilden, wobei das durch den ersten und den dritten Schenkel gebildete, einander gegenüberliegende Paar der Schenkel (206 c, e) gebogen ist, um einen Nasenabschnitt (212) zu bilden, der sich bis jenseits der Nabe (190) erstreckt, um zwei Arretierungen zu bilden, wobei jede Nase (212) eine erste Fläche (212 a), die eine Angriffsfläche der Arretierung definiert, und eine zweite Angriffsfläche (212 b) aufweist, die in einer im Wesentlichen abwärts weisenden Richtung, schräg zu der Achse der Drehung weist, um ein Anbringen bzw. ein Entfernen der Spule (194) an bzw. von der Nabe (190) in einer einzigen Bewegung zu ermöglichen, und wobei das durch den zweiten und den vierten Schenkel gebildete, einander gegenüberliegende Paar der Schenkel (206 b, d) Haltezungen (208), wobei eine solche Haltezunge (208) an jedem entsprechenden Schenkel gebildet ist, gegen zusammenwirkende Flächen innerhalb des Halses (196) drängt, um hierdurch die Feder (182) und die Arretierung innerhalb des Halses (196) zurückzuhalten.

7. Der Fadenkopf nach einem der Ansprüche 1 bis 6, bei dem sich die Arretierung radial auswärts von der Nabe unterhalb der Spule (116) erstreckt; und bei dem die Spule (116) einen von ihrer unteren Seite herabhängenden Knopf (130) aufweist, um eine axial aufwärts gerichtete Verschiebung der Spule (116) zu ermöglichen, wenn der Knopf (130) auf den Boden auftrifft.

8. Der Fadenkopf nach Anspruch 7, ferner eine Einrichtung (140, 142) zum Weiterschalten der Spule (116) aufweisend, um eine vorbestimmte Länge des Fadens in Reaktion auf eine aufwärts gerichtete, axiale Verschiebung der Spule (116) in Bezug auf das Gehäuse (104) loszulassen.

9. Der Fadenkopf nach Anspruch 7, der ferner eine Schraubenfeder (129) aufweist, die konzentrisch mit der Nabe (114) zwischen der Spule (116) und dem Fadenkopfgehäuse (104) ist, um die Spule (116) axial abwärts gegen die Arretierung vorzuspannen.

10. Der Fadenkopf nach einem der Ansprüche 1 bis 9, bei dem die Spule (116) eine hohle Nabe (117), durch die sich die Nabe (114) des Gehäuses erstreckt, und zwei Flansche (128,134) aufweist, die an entgegengesetzten Enden der Nabe (117) angeordnet sind und sich radial von dieser erstrecken, wobei die Nabe (117) eine Mehrzahl von beabstandeten Rippen aufweist, die die Außenumfangsfläche der Nabe umgreifen, um eine seitliche Bewegung des Fadens zu verringern, der um die Nabe herum gewunden ist.

## Revendications

1. Tête de coupe (108) pour une tondeuse à fil souple comprenant une bobine (116) destinée à retenir une réserve de fil souple ;
un carter (104) destiné à être couplé à un arbre rotatif (110) destiné à pivoter autour d'un axe, le carter (104) comprenant un moyeu (114) s'étendant vers le bas à l'intérieur d'une position centrale du carter (104) sur lequel la bobine (116) est montée pour pivoter de manière coaxiale par rapport à l'axe du carter (104) ;
un cliquet (122; 182) ayant une surface d'engagement (122a, 122b) s'étendant de manière radiale au-delà du moyeu (114) pour coopérer avec la bobine (116) afin de retenir la bobine (116) sur le moyeu (114) dans une direction axiale tout en permettant la rotation de la bobine (116) sur le moyeu (114), la surface d'engagement (122a, 122b) étant généralement tournée vers le haut, selon un angle oblique par rapport à l'axe de rotation, afin de permettre à la bobine de déprimer le cliquet de manière radiale vers l'intérieur lorsque la bobine est tirée de manière axiale vers le bas par rapport au moyeu (114), dégageant ainsi la bobine (116) et permettant le retrait de la bobine (116) du moyeu (114) ; et
un ressort (118 ; 182) disposé à l'intérieur d'un logement (124, 196) défini à l'intérieur d'une partie inférieure du moyeu (114) pour pousser le cliquet (122) dans une position étendue, le ressort (118) et le logement ayant des surfaces qui coopèrent pour retenir le ressort (118) à l'intérieur du logement (124, 196) sans élément de fixation séparé.

2. Tête de coupe selon la revendication 1, dans laquelle le moyeu (114) est formé à partir d'un matériau électriquement isolé et dans laquelle le logement (124, 196) qui y est défini isole électriquement le cliquet d'un arbre d'entraînement (103) d'un moteur (102) reçu à l'intérieur d'une partie supérieure du moyeu (114).

3. Tête de coupe selon la revendication 2, dans laquelle la tête de coupe est attachée à un arbre d'entraînement fileté autotaraudeux d'un moteur (102) par l'intermédiaire d'un trou défini dans la partie supérieure du moyeu (114), et dans laquelle le moyeu (114) est formé à partir d'un matériau plastique.

4. Tête de coupe selon la revendication 1, 2 ou 3, dans laquelle le ressort (182) comprend des première et seconde jambes (206b, 206e) pouvant fonctionner en tant que ressorts du type ressort à lames, la première jambe (206b) étant courbée de manière à former un bouton (212, 122) qui s'étend au-delà du moyeu (190) pour former le cliquet et qui présente une première surface (122b, 212a) définissant la surface d'engagement du cliquet et une seconde surface d'engagement (122a, 212b) faisant généralement face vers le bas, selon un angle oblique par rapport à l'axe de rotation de manière à permettre le montage et le retrait de la bobine (116) sur le moyeu (114, 190) en un seul mouvement, et la seconde jambe (206b, 206d) ayant une surface coopérante (208) formée sur celle-ci qui est poussée contre une surface coopérante formée à l'intérieur du logement (198) de manière à ainsi retenir le ressort (182) et le cliquet à l'intérieur du logement (198).

5. Tête de coupe selon la revendication 4, dans laquelle le logement (190) comprend une ouverture faisant face de manière axiale vers le bas destinée à insérer le ressort (182) et dans laquelle la surface coopérante (208) de la seconde jambe (206b, 206d) du ressort (182) comprend une patte poussée par la seconde jambe vers l'extérieur de manière à venir en prise avec la surface coopérante du logement (196) défini par une fente (210) formée dans une paroi du logement (196) afin de permettre le montage du ressort (212) à l'intérieur du logement (190) en un seul mouvement sans élément de fixation supplémentaire.

6. Tête de coupe selon la revendication 1, 2 ou 3, dans laquelle le ressort comprend des première, deuxième, troisième et quatrième jambes (206b, 206c, 206d, 206e) formant des ressorts du type ressorts à lames, les première et troisième paires opposées de jambes (206c, 206e) étant courbées de manière à former une partie de bouton (212) qui s'étend audelà du moyeu (190) pour former deux cliquets, chaque bouton (212) ayant une première surface (212a) définissant une surface d'engagement du cliquet et une seconde surface d'engagement (212b) faisant face généralement vers le bas, selon un angle oblique par rapport à l'axe de rotation afin de permettre le montage et le retrait de la bobine (194) sur le moyeu (190) en un seul mouvement, et les deuxième et quatrième paires opposées de jambes (206b, 206d) poussant les pattes de retenue (208) formées sur chaque jambe respective contre les surfaces coopérantes à l'intérieur du logement (196) afin d'ainsi retenir le ressort (182) et le cliquet à l'intérieur du logement (196).

7. Tête de coupe selon l'une quelconque des revendications 1 à 6, dans laquelle le cliquet s'étend de manière radiale vers l'extérieur à partir du moyeu en dessous de la bobine (116), et dans laquelle la bobine (116) comprend un bouton (130) dépendant de sa surface inférieure afin de permettre le déplacement axial vers le haut de la bobine (116) lorsque le bouton (130) est cogné contre le sol.

8. Tête de coupe selon la revendication 7, comprenant en outre des moyens (140, 142) destinés à indexer la bobine (116) de manière à délivrer une longueur prédéterminée de fil en réponse à un déplacement axial vers le haut de la bobine (116) par rapport au carter (104).

9. Tête de coupe selon la revendication 7, comprenant en outre un ressort enroulé (129) concentrique avec le moyeu (114) entre la bobine (116) et le carter (104) de la tête de coupe dans le but de solliciter la bobine (116) de manière axiale vers le bas contre le cliquet.

10. Tête de coupe selon l'une quelconque des revendications 1 à 9, dans laquelle la bobine (116) comprend un moyeu creux (117) à travers leque le moyeu du logement (114) s'étend ainsi que deux brides (128, 134) situées au niveau des extrémités opposées du moyeu (117) et s'étendant de manière radiale à partir de celui-ci, le moyeu (117) comprenant une pluralité d'arêtes espacées les unes des autres et enroulées autour de la circonférence extérieure du moyeu dans le but de réduire le mouvement latéral du fil enroulé autour du moyeu.
